# EUROPÄISCHE PATENTANMELDUNG

(11) **EP 1 323 511 A1**
(43) Veröffentlichungstag der Anmeldung: **02.07.2003**
(21) Anmeldenummer: 02028394.1
(22) Anmeldetag: 18.12.2002
(51) Int. Cl.: B29C 33/00, B22D 17/22

(54) **Werkzeug mit Beobachtungsöffnungen mit Glas oder Linse**

(30) Priorität: 20.12.2001 DE 20120670 U; 11.01.2002 DE 20200379 U
(71) Anmelder: Heitec- Heisskanaltechnik GmbH, 35099 Burgwald-Bottendorf (DE)
(72) Erfinder: Schreck, Hans, 35099 Burgwald-Bottendorf (DE)
(74) Vertreter: Böck, Bernhard

(57) **Zusammenfassung**

Die Wartung von Werkzeugen, in deren Innerem sich Funktionsteile befinden, wird erheblich erleichtert, wenn diese Funktionsteile einer ständigen Beobachtung und Kontrolle unterzogen werden können, ohne dass das Werkzeug auseinandergenommen werden muss. Zu diesem Zweck sind in dem Korpus des Werkzeuges durch Verschlüsse abdeckbare Ausnehmungen vorgesehen, wobei die Verschlüsse ein Glasscheibe oder eine optische Linse beinhalten.

## Beschreibung

Die Erfindung betrifft ein Werkzeug zur Metall- oder Kunststoff-Bearbeitung in komplexer Bauweise aus einem Grundkörper mit integrierten Funktionsteilen, die in dafür vorgesehenen Hohlräumen des Grundkörpers vorzugsweise auswechselbar vorgesehen sind, beispielsweise Spritzwerkzeug für Kunststoffe oder dergleichen mit für sich bekannten Kanalführungen, Auswerfern sowie Führungen und der gleichen mehr.

Bei derartigen Werkzeugen sind die in ihrem Inneren als zumeist eigenständige Baugruppen untergebrachten Funktionsteile in der Regel einzeln auswechselbar, um zu vermeiden, dass das gesamte Werkzeug außer Dienst gestellt werden muss, wenn es im Übrigen noch funktionsfähig ist. Oft fallen derartige Funktionsteile nicht abrupt aus, sondern verlieren ihre Funktionstüchtigkeit allmählich, ohne dass dies an dem Werkzeug ohne dessen Demontage festgestellt werden könnte. Es kommt vor, dass bei rechtzeitigem Erkennen von Schäden oder Verschleiß sich der Aufwand zur Abstellung derartiger Mängel in Grenzen halten könnte, aber stattdessen dann, wenn diese Mängel offenkundig werden, es zumeist eines erheblich größeren Aufwandes und höherer Kosten bedarf, um die Funktionsfähigkeit wieder zurückgewinnen zu können.

Die Erfindung hat sich deshalb die Aufgabe gestellt, ein Werkzeug der eingangs näher bezeichneten Art so auszubilden, dass solche Mängel beizeiten erkannt und möglichst kurzfristig vollständig abgestellt werden können, um Folgeschäden zu vermeiden.

Erfindungsgemäß wird die Aufgabe dadurch gelöst, dass in dem Grundkörper aus den Hohlräumen nach außen führende Ausnehmungen vorgesehen und so angeordnet sind, dass die integrierten Funktionsteile ohne Störung ihrer Funktion auf ihre Arbeitsweise, Funktionsfähigkeit, Maßhaltigkeit und dergleichen hin in situ ohne Demontage des Werkzeuges visuell überprüfbar sind. Mittels einer solchen einfachen und zumeist ohne besondere konstruktive Schwierigkeiten realisierbaren Maßnahme können nun die für die Funktion des Werkzeuges essentiellen und einer beständigen, hohen Beanspruchung und fortwährendem Verschleiß unterliegenden Baugruppen kontinuierlich auf ihre Funktionsfähigkeit kontrolliert werden, so dass bereits dann, wenn diese nicht mehr völlig gewährleistet ist und der Ausfall der entsprechenden Baugruppe sich anbahnt, rechtzeitig entsprechende Reparaturmaßnahmen ergriffen werden können. Regelmäßige Inspektionen durch Öffnen des Werkzeuges sind deshalb nicht mehr erforderlich, vielmehr wird dieses stets erst dann demontiert, wenn sich tatsächlich Funktionsfehler ankündigen. Damit werden die Wartungskosten für diese zumeist sehr teuren Werkzeuge ganz erheblich reduziert und deren Wirtschaftlichkeit außerordentlich verbessert, ohne dass es dazu aufwendiger Messeinrichtungen und Kontrollmessungen bedürfte.

Zur Umgebung hin offene Ausnehmungen der erfindungsgemäßen Art werden allerdings im rauhen Werkstattbetrieb eigentlich möglichst vermieden, damit die empfindlicheren Baueinheiten des Werkzeuges nicht Verschmutzungen, starkem Wärmeeintrag und anderen Umwelteinflüssen ausgesetzt sind. Die Erfindung vermeidet derartige Gefährdungen, indem weiterhin erfindungsgemäß die Ausnehmungen mittels eines Verschlusses abdeckbar sind.

Dieser Verschluss ist im einzelnen am besten als Deckelflansch ausgeführt, wobei es besonders praktisch ist, wenn dieser Deckelflansch aus einem an dem Grundkörper fixierbaren Halteflansch und einer von dem Halteflansch umfassten Sichtöffnung besteht, die beispielsweise durch eine Glasscheibe abgedeckt ist. Auf diese Weise kann eine visuelle Inspektion ohne Probleme zu jeder Zeit durchgeführt werden, ohne dass die über die Ausnehmungen wahrnehmbaren Funktionsteile dabei beeinträchtigt werden. Ein solcher Verschluss bietet sich außerdem als Werbeträger für den Werkzeughersteller oder die Wartungsfirma an, weil darauf aufgebrachte Firmennamen oder Warenmarken bei jeder Inspektion erneut ins Auge fallen und sich werbewirksam in Erinnerung bringen. Über die eigentliche Aufgabenstellung hinaus findet damit gleichzeitig eine intensive Firmenwerbung statt.

Nachfolgend wird an Hand der Zeichnung die Erfindung an einem Ausführungsbeispiel näher erläutert. Es zeigen
- Fig. 1: in lediglich schematischer Darstellung ein gattungsgemäßes Werkzeug nach dem bekannten Stand der Technik,
- Fig.2: in einer der Fig. 1 entsprechenden Darstellung ein Werkzeug gemäß der Erfindung und
- Fig. 3: eine Einzelheit aus der Fig.2 in Vorder- und Seitenansicht.

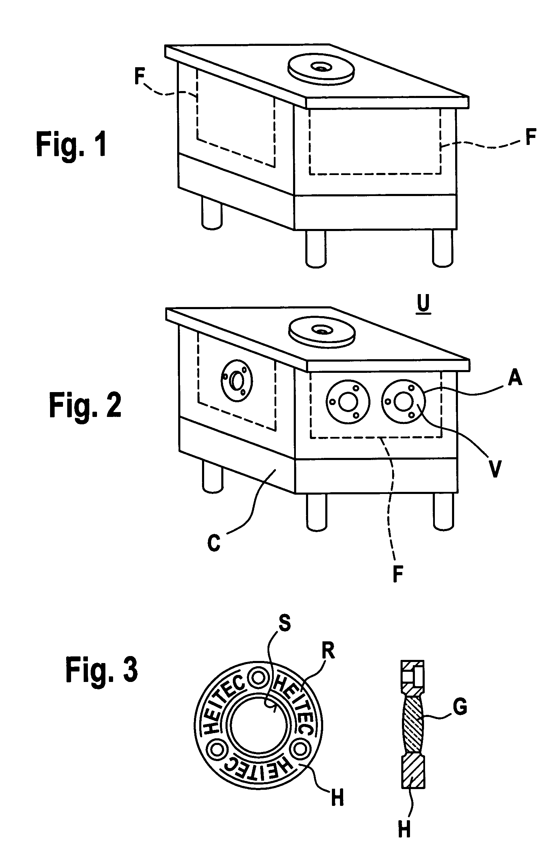

In der Fig.1 ist in groben Zügen ein Teil eines Kunststoff-Spritzwerkzeuges dargestellt; gestrichelt ist angedeutet, dass sich in seinem Inneren für sich bekannte Funktionsteile F, beispielsweise Spritzkanäle, Ventile, Heizungen, Auswerfer, Führungen oder dergleichen befinden und dass diese Funktionsteile von außen weder sichtbar noch zugänglich sind. Ein solches Werkzeug bleibt deshalb so lange in Gebrauch, bis sich Verschleißerscheinungen oder Störungen an seinen Funktionsteilen an den ausgeführten Kunststoff-Spritzerzeugnissen manifestieren.

Die Funktionsteile F sind in der erfindungsgemäßen Ausbildung des gleichen Kunststoff-Spritzwerkzeuges entsprechend Fig.2 jeweils über eine oder mehrere gepunktet angedeutete Ausnehmungen A im Corpus C des Werkzeuges einsehbar; jede Ausnehmung A ist dabei mittels eines Verschlusses V abgedeckt, der das betreffende Funktionsteil F von der Umgebung U abschirmt.

Die Verschlüsse V sind dabei als Deckelflansch und jeweils zweigeteilt ausgeführt und weisen entsprechend Fig.3 einen zur Befestigung an dem Werkzeug dienenden Halteflansch H auf, der eine Sichtöffnung S umgibt, eine Glasscheibe G für die Sichtöffnung S einfasst und zur Befestigung des Verschlusses V an dem Corpus C dient.

Die Glasscheibe kann nach einem Ausführungsbeispiel als optische Linse, insbesondere als Weitwinkellinse, ausgebildet sein, um den jeweiligen Hohlraum möglichst vollständig inspizieren zu können und insbesondere Einsicht in Eckbereiche des Hohlraums zu erhalten.

Weiter kann eine in den Figuren nicht dargestellte Beleuchtungseinrichtung im jeweiligen Hohlraum vorgesehen sein, die vorzugsweise von außen an- und ausschaltbar ist.

Der Rand R des Halteflansches H steht gleichzeitig als Werbeträger zur Verfügung und kann mit einem Firmen-Namen oder einer Warenmarke insbesondere für den Hersteller des Werkzeuges oder eine Wartungsfirma genutzt werden.

### Bezugszeichenliste

- A: Ausnehmung
- C: Corpus, Grundkörper
- F: Funktionsteil
- G: Glasscheibe
- H: Halteflansch
- R: Rand
- S: Sichtöffnung
- U: Umgebung
- V: Verschluss

## Patentansprüche

1. Werkzeug zur Metall- oder Kunststoff-Bearbeitung in komplexer Bauweise aus einem Grundkörper (C) mit integrierten Funktionsteilen (F), die in dafür vorgesehenen Hohlräumen des Grundkörpers (C) vorzugsweise auswechselbar vorgesehen sind, beispielsweise Spritzwerkzeug für Kunststoffe oder dergleichen mit Kanalführungen und Auswerfern,
**dadurch gekennzeichnet, dass**
in dem Grundkörper (C) aus den Hohlräumen nach außen führende Ausnehmungen (A) vorgesehen und so angeordnet sind, dass die integrierten Funktionsteile (F) ohne Störung ihrer Funktion auf ihre Arbeitsweise, Funktionsfähigkeit, Maßhaltigkeit und dergleichen hin in situ ohne Demontage des Werkzeuges visuell überprüfbar sind.

2. Werkzeug nach Anspruch 1, **dadurch gekennzeichnet, dass** die Ausnehmungen (A) jeweils mittels eines Verschlusses (V) abdeckbar sind.

3. Werkzeug nach Anspruch 2, **dadurch gekennzeichnet, dass** der Verschluss (V) als Deckelflansch ausgeführt ist.

4. Werkzeug nach Anspruch 3, **dadurch gekennzeichnet, dass** der Deckelflansch aus einem an dem Grundkörper (C) fixierbaren Halteflansch (H) und einer von dem Halteflansch (H) umfassten Sichtöffnung (S) besteht.

5. Werkzeug nach Anspruch 4, **dadurch gekennzeichnet, dass** die Sichtöffnung (S) durch eine Glasscheibe (G) abgedeckt ist.

6. Werkzeug nach Anspruch 5, **dadurch gekennzeichnet, dass** die Glasscheibe (G) als optische Linse, insbesondere als Weitwinkellinse, ausgebildet ist.

7. Werkzeug nach einem der Ansprüche 1 bis 6, **dadurch gekennzeichnet, dass** in mindestens einem der Hohlräume des Grundkörpers (C) eine Beleuchtungseinrichtung vorgesehen ist.

8. Werkzeug nach Anspruch 7, **dadurch gekennzeichnet, dass** die Beleuchtungseinrichtung von außen an- und ausschaltbar ist.

9. Werkzeug nach einem der Ansprüche 2 bis 8, **dadurch gekennzeichnet, dass** der Verschluss (V) als Werbeträger für den Werkzeughersteller oder die Wartungsfirma dient.
